# EUROPEAN PATENT APPLICATION

(11) **EP 4 417 387 A1**
(43) Date of publication of application: **21.08.2024**
(21) Application number: 22880273.2
(22) Date of filing: 10.10.2022
(51) Int. Cl.: B29B 7/20, B29C 48/285

(54) **INTERNAL MIXING EXTRUDER**

(30) Priority: 14.10.2021 CN 202122479470 U
(71) Applicant: Wuxi Boyu Plastic Machinery Co., Ltd., Wuxi, Jiangsu 214111 (CN)
(72) Inventor: LU, Dingyi, Wuxi, Jiangsu 214111 (CN)
(74) Representative: PGA S.p.A., Milano, Succursale di Lugano
(86) International application number: PCT/CN2022/124429
(87) International publication number: WO 2023/061336

(57) **Abstract**

The present application discloses an internal mixing extruder, comprising: an internal mixing mechanism, which comprises an internal mixing chamber, the rear end of the internal mixing chamber being provided with a first feed port, the front end being provided with a first discharge port, and the internal mixing chamber being internally provided with rotors arranged along the front and rear; an extruding mechanism, which is located below the internal mixing mechanism, the extruding mechanism comprising an extruding chamber, a second feed port being provided at the rear end of the extruding chamber, a mould being provided at the front end, and a screw rod being provided in the extruding chamber along the front and rear; and a hopper, which is connected between the first discharge port and the second feed port. Materials are fully plasticized in the internal mixing mechanism, the fully plasticized materials enter the hopper, the hopper delivers materials to be extruded into the extruding mechanism by using a forced feeding device, and the materials are fixed and formed by a mould after the extruding process is completed. Therefore, the present application has a high automation degree, reduces manpower investment, and eliminates a stirring procedure and a cooling procedure, thereby reducing energy waste, which is suitable for the application field of internal mixing extruders, and can produce the positive effect of high working efficiency.

## Description

### Technical field

The application model relates to the field of plastic processing and production, especially relates to an internal mixing extruder.

### Background art

In the extruding stage of existing PVC flooring production, a high-speed mixer is first used to stir the material to a high temperature of about 120°C, and then it is discharged into a cooling mixer for cooling, and a conical twin-screw extruder with good shear force is used for forced plasticization. This method wastes a lot of energy. It needs to be heated for about 20-40 minutes, cooled at high temperature, and then discharged into an extruder heated to 190-200°C for plasticization and extrusion into plates. The material is heated to 120-135°C by a high-speed mixer, and then cooled to about 50°C by a cooling mixer. There is a temperature difference of 70-85°C in the middle. This method has high energy consumption, a long mixing time cycle, and high mixing costs. Furthermore, the material is plasticized only through forced shearing and frictional heat generation by the screw rod of the extruder. For PVC rigid products that do not contain plasticizers, the plasticizing effect is not good.

### Summary of invention

The application aims to solve at least one of the technical problems existing in the prior art. To this end, the application proposes an internal mixing extruder.

The internal mixing extruder according to the first aspect of the application of the invention, comprises: an internal mixing mechanism, comprising an internal mixing chamber, a first feed port being arranged at a rear end of the internal mixing chamber, a first discharge port being arrange at the front end of the internal mixing chamber, rotors being arranged along the front and rear in the internal mixing chamber; an extruding mechanism, located below the internal mixing mechanism, the extruding mechanism comprises an extruding chamber, a second feed port being arranged at a rear end of the extruding chamber, a mould being arranged at a front end of the extruding chamber, a screw rod being arranged along the front and rear in the extruding chamber; a hopper, the hopper being connected between the first discharge port and the second feed port.

The internal mixing extruder according to the embodiments of the application at least has the following technical effects: the application makes use of the structure design of the hopper connected between the first discharge port and the second feed port, which makes the material enter the extruding mechanism directly after the internal mixing process and improves the efficiency of the extruding process. The material is fully plasticized in the internal mixing mechanism, the fully plasticized material enters the hopper, the hopper feeds the material to be extruded into the extruding mechanism in the form of forced feeding, the material is extruded and formed under the action of the screw rod and the mould. The rotors are located in the internal mixing chamber for internal mixing, which reduces the harm of the dust to the environment. Therefore, the application has a high automation degree, reduces the investment of manpower, removing the stirring process and cooling process, so as to reduce the waste of energy, is suitable for the application field of internal mixing extruders, and can generate high working efficiency of positive effect.

According to some embodiments of the application, the rotor has double-kneaded structure, the rotor comprises a rotor shaft, a feeding conveying section, a first mixing section, a first screw section, a second mixing section and a first discharging section being arrange in sequence on the rotor.

According to some embodiments of the application, a second screw section is further arranged between the second mixing section and the first discharging section.

According to some embodiments of the application, the rotor has a single kneaded structure, the rotor comprises a rotor shaft, a feeding conveying section, a mixing section and a second discharging section being arranged in sequence on the rotor shaft.

According to some embodiments of the application, a third screw section is arranged between the mixing section and the second discharging section.

According to some embodiments of the application, a forced feeding device is arranged in the hopper, the forced feeding device comprising two parallel rotating shafts, blades being arranged on the rotating shafts, the two rotating shafts rotate relatively to each other.

According to some embodiments of the application, the two rotating shafts are respectively driven by a driving gear and a driven meshing with each other.

According to some embodiments of the application, the screw rod is a conical double-screw rod, a single screw rod or a parallel double-screw rod.

Additional aspects and advantages of the present application will be given in part in the following description, part will become apparent from the following description, or be learned by practice of the application.

### Description of drawings

Additional aspects and advantages of the present application will become apparent and readily understood from the following description of the embodiments in conjunction with the accompanying drawings, in which:
FIG. 1 is a structure schematic diagram of the internal mixing extruder according to embodiments of the application;
FIG. 2 is a schematic view of a first structure of a rotor;
FIG. 3 is a schematic view of a second structure of a rotor;
FIG. 4 is a schematic view of a third structure of a rotor;
FIG. 5 is a schematic view of the fourth structure of a rotor.

Reference signs: internal mixing mechanism 100, internal mixing chamber 110, first feed port 120, first discharge port 130, rotor 140, rotor shaft 141, feeding conveying section 142, first mixing section 143, first screw section 144, second mixing section 145, first discharging section 146, second screw section 147, mixing section 148, second discharging section 149, third screw section 150, extruding mechanism 200, extruding chamber 210, second feed port 220, mould 230, screw rod 240, hopper 300, forced feeding device 310.

### Detailed Description

The embodiments of the present application are described in detail below. Examples of the embodiments are shown in the accompanying drawings, wherein the same or similar reference signs throughout represent the same or similar elements or elements with the same or similar functions.

The embodiments described below with reference to the drawings are exemplary and are only used to explain the present application and cannot be understood as limiting the present application.

In the description of this application, it should be understood that the orientation descriptions involved, such as the orientation or positional relationship indicated by up, down, front, rear, etc. are based on the orientation or positional relationship shown in the drawings and are only for the convenience of describing this application. The application and simplified description are not intended to indicate or imply that the device or element referred to must have a specific orientation, be constructed, and operate in a specific orientation, and therefore should not be construed as a limitation on the present application.

In the description of this application, several means one or more, and plural means two or more. If the first and second are described, it is only for the purpose of distinguishing technical features and cannot be understood as an indication or implication of relative importance, or an implicit indication of the quantity of indicated technical features, or implicit indication of the sequence relationship of indicated technical features.

In the description of this application, unless otherwise explicitly limited, words such as connection should be understood in a broad sense. Those skilled in the art can reasonably determine the specific meaning of the above words in this application in combination with the specific content of the technical solution.

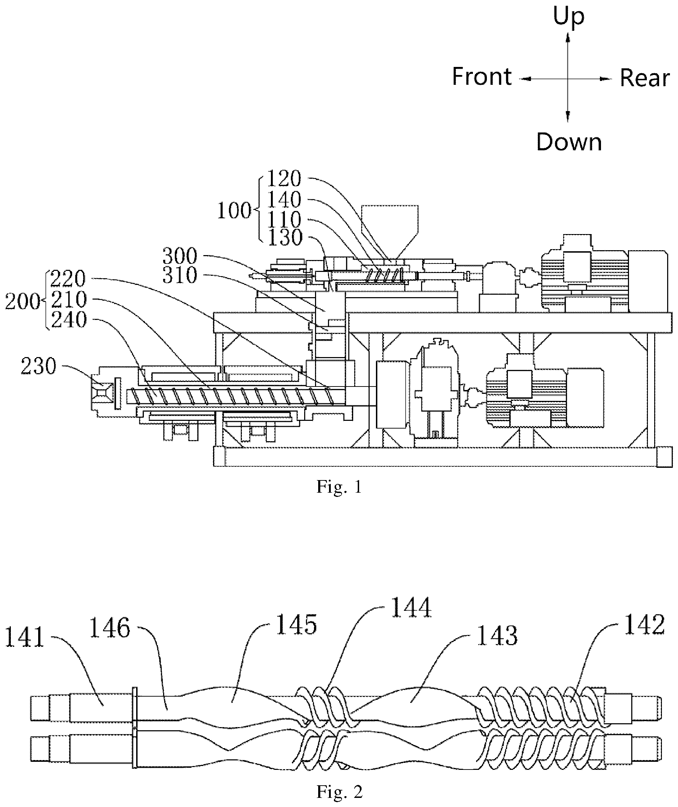

Referring to Figure 1, the internal mixing extruder according to the embodiment of the present application comprises: an internal mixing mechanism 100, comprising an internal mixing chamber 110. The rear end of the internal mixing chamber 110 is provided with a first feed port 120, and the front end is provided with a first discharge port 130, rotors 140 are arranged along the front and rear in the internal mixing chamber 110; the rotors 140 are used to quickly disperse and plasticize the material, and the rotors 140 are rotatably installed in the sealed internal mixing chamber 110, thereby reduce the harm of dust to the environment; it should be noted that the rear end of the internal mixing chamber 110 is located at the top of the internal mixing chamber 110, and the front end of the internal mixing chamber 110 is located at the bottom of the internal mixing chamber 110.The extruding mechanism 200 is located below the internal mixing mechanism 100. The extruding mechanism 200 comprises an extruding chamber 210. The rear end of the extruding chamber 210 is provided with a second feed port 220, and the front end is provided with a mould 230. Inside the extruding chamber 210, there is a screw rod 240 arranged along the front and rear; the screw rod 240 is used for the extruding process of the material, and the mould 230 and the screw rod 240 jointly extrude the material into shape; it should be noted that the rear end of the extruding chamber 210 is located at the top of the extruding chamber 210. The front end of the extruding chamber 210 is located at the bottom of the extruding chamber 210; the hopper 300 is connected between the first discharge port 130 and the second feed port 220; the application has a simple structure, high efficiency and environmental protection, and can manufacture or use, suitable for the field of plastic processing and production, and can produce positive effects of continuous work. Specifically, this application uses a structural design in which the hopper 300 is connected between the first discharge port 130 and the second feed port 220 to continuously perform the internal mixing process and the extruding process, thus improving the efficiency of the internal mixing process and the extruding process. The work efficiency is high, so it is suitable for the field of plastic processing and production.

Taking the material entering the internal mixing mechanism 100 from the start of internal mixing to the completion of the extruding process as an example, during operation: the material is conveyed from the first feed port 120 to the internal mixing chamber 110 for the internal mixing process, and the rotors 140 start to rotate to perform the internal mixing process. The internally mixed materials are conveyed into the hopper 300 through the first discharge port 130, and the hopper 300 is forced to feed the materials so that the materials quickly enter the extruding chamber 210 for the extruding process. The screw rod 240 starts to rotate to perform the extruding process, and the mould 230 and the screw 240 work together to complete the extruding and molding of the material.

In some embodiments of the present application, as shown in Figure 2, the rotor 140 has a double kneaded structure. The rotor 140 includes a rotor shaft 141. The rotor shaft 141 is sequentially provided with a feeding conveying section 142, a first mixing section 143, a first screw section 144, a second mixing section 145 and a first discharging section 146. This type of rotor can effectively fill the entire internal mixing chamber with materials during internal mixing. It has a high filling rate and good dispersion and is suitable for temperature-sensitive raw materials and enables good plasticizing effects.

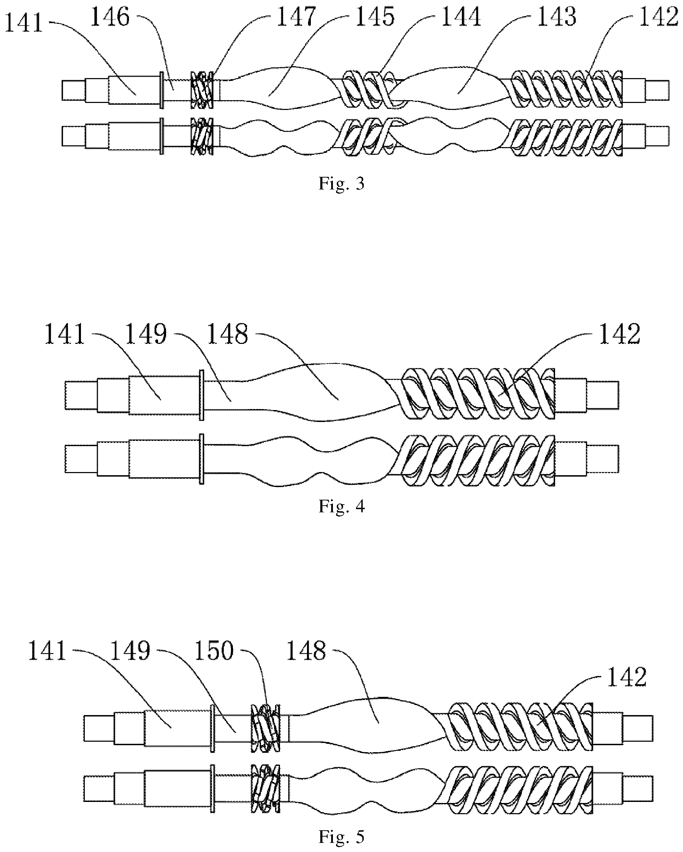

In a further embodiment of the present application, as shown in Figure 3, the rotor 140 has a double kneaded structure. The rotor 140 includes a rotor shaft 141. The rotor shaft 141 is sequentially provided with a feeding conveying section 142, a first mixing section 143, a first screw section 144, a second mixing section 145 and a first discharging section 146. A second screw section 147 is also provided between the second mixing section 145 and the first discharging section 146.The entire rotor is lengthened, which has a good effect on material discharge. Before discharging, the material is cut from the original block into small pieces or large particles, which facilitates the feeding of the extruding chamber below. In addition, it can also improve the plasticizing effect and shorten the time.

In some embodiments of the present application, as shown in Figure 4, the rotor 140 has a single kneaded structure. The rotor 140 includes a rotor shaft 141. The rotor shaft 141 is sequentially provided with a feeding conveying section 142, a mixing section 148 and a second discharge section 149. This type of rotor 140 has strong versatility and good stability in conveying materials.

In a further embodiment of the present application, as shown in Figure 5, the rotor 140 has a single kneaded structure. The rotor 140 includes a rotor shaft 141. The rotor shaft 141 is sequentially provided with a feeding conveying section 142, a mixing section 148 and a second discharge section 149. A third screw section 150 is also provided between the mixing section 148 and the second discharging section 149. The entire rotor 140 is lengthened, which has a good effect on material discharge. Before discharging, the material is cut from the original block into small pieces or large particles, which facilitates the entry of the extruding chamber below. In addition, it can also improve the plasticizing effect and shorten the time.

In some embodiments of the present application, as shown in Figure 1, a forced feeding device 310 is provided in the hopper 300. The forced feeding device 310 comprises two rotating shafts arranged in parallel. Paddles are provided on the rotating shafts. The two rotating shafts rotate relatively to each other. The forced feeding system are used to shorten the retention time of material and improve the conveying efficiency.

In a further embodiment of the present application, the two rotating shafts are respectively driven by a driving gear and a driven gear intermeshed with each other, and the driving gear and the driven gear are used to provide the initial power for the rotation of the rotating shafts.

In some embodiments of the present application, as shown in Figure 1, the screw rod 240 is a conical twin screw rod, a single screw rod, or a parallel twin screw rod. The application of the screw rod 240 allows the material to be plasticized more fully and evenly in the extruding chamber 210, ensuring the quality of the product.

In the description of this specification, reference to the terms "some embodiments" or "it is contemplated" or the like means that a particular feature, structure, materials, or characteristic described in connection with the embodiment or example is included in at least one embodiment or example of the present applications. In this specification, schematic representations of the above terms do not necessarily refer to the same embodiment or example. Furthermore, the specific features, structures, materials, or characteristics described may be combined in any suitable manner in any one or more embodiments or examples.

Although the embodiments of the present application have been shown and described, those of ordinary skill in the art will understand that various changes, modifications, substitutions and modifications can be made to these embodiments without departing from the principles and purposes of the present application. The scope of the application is defined by the claims and their equivalents.

## Claims

1. A internal mixing extruder, **characterized in that** it comprises:
an internal mixing mechanism (100), comprising an internal mixing chamber (110), a first feed port (120) being arranged at a rear end of the internal mixing chamber (110), a first discharge port (130) being arranged at a front end of the internal mixing chamber (110), a rotor (140) being arranged along the front and rear in internal mixing chamber (110);
an extruding mechanism (200), located below the internal mixing mechanism (100), the extruding mechanism (200) comprising an extruding chamber (210), a second feed port (220) being arranged at the a rear end of the extruding chamber (210), a mould (230) being arranged at a front end of the extruding chamber (210), a screw rod (240) being arranged along the front and rear in the extruding chamber (210);
a hopper (300), which is connected between the first discharge port (130) and the second feed port (220).

2. The internal mixing extruder according to claim 1, **characterized in that** the rotor (140) has a double-kneaded structure, the rotor (140) comprising a rotor shaft (141), a feeding conveying section (142), a first mixing section (143), a first screw section (144), a second mixing section (145) and a first discharging section (146) being arranged in sequence on the rotor shaft (141).

3. The internal mixing extruder according to claim 2, **characterized in that** a second screw section (147) is arranged between the second mixing section (145) and the first discharging section (146).

4. The internal mixing extruder according to claim 3, **characterized in that** the rotor (140) has a single kneaded structure, the rotor (140) comprising a rotor shaft (141), a feeding conveying section (142), a mixing section (148) and a second discharging section (149) being arranged in sequence on the rotor shaft (141).

5. The internal mixing extruder according to claim 4, **characterized in that** a third screw section (150) is further arranged between the mixing section (148) and the second discharging section (149).

6. The internal mixing extruder according to claim 1, **characterized in that** a forced feeding device (310) is arranged in the hopper (300), the forced feeding device (310) comprising two rotating shafts arranged in parallel, blades being arranged on the rotating shafts, the two rotating shafts rotating relatively.

7. The internal mixing extruder according to claim 6, **characterized in that** the two rotating shafts are respectively driven by a driving gear and a driven gear meshing with each other.

8. The internal mixing extruder according to claim 1, **characterized in that** the screw rod (240) is a conical double-screw rod, a single-screw rod, or a parallel double-screw rod.
